(19) Europäisches Patentamt
European Patent Office
Office européen des brevets

(11) **EP 4 763 411 A1**

(12) **EUROPEAN PATENT APPLICATION**

(43) Date of publication:
**24.06.2026 Bulletin 2026/26**

(21) Application number: **25224485.0**

(22) Date of filing: **17.12.2025**

(51) International Patent Classification (IPC):
**B23K 35/26** (2006.01)   **C22C 13/02** (2006.01)

(52) Cooperative Patent Classification (CPC):
**C22C 13/02; B23K 35/26**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **19.12.2024 JP 2024224522**

(71) Applicant: **Senju Metal Industry Co., Ltd.**
**Tokyo 120-8555 (JP)**

(72) Inventors:
• YOKOYAMA, Takahiro
  Tokyo, 120-8555 (JP)
• YOSHIKAWA, Shunsaku
  Tokyo, 120-8555 (JP)
• MATSUFUJI, Takahiro
  Tokyo, 120-8555 (JP)

(74) Representative: **Zimmermann & Partner**
**Patentanwälte mbB**
**P.O. Box 330 920**
**80069 München (DE)**

(54) **SOLDER ALLOY, SOLDER PASTE, SOLDER BALL, SOLDER PREFORM, AND SOLDER JOINT**

(57)    [Problem] Provided are a solder alloy, a solder paste, a solder ball, a solder preform, and a solder joint which have excellent drop impact resistance and heat cycle resistance, can suppress the occurrence of chip standing, bridges and icicles, and can also suppress the occurrence of electromigration.

[Solution] A solder alloy has an alloy composition consisting of, by mass%, Ag: 0.3 to 1.9%, Cu: 0.40 to 1.00%, Bi: 0.5 to 4.9%, P: 0.00100 to 0.02000%, with the balance being Sn. The alloy composition may further contain, by mass%, each of Ge, Co and Ga in an amount of 0.06% or less, and at least one. In addition, the alloy composition may further contain, by mass%, each of As, In, Zr, Mn, Ti, Zn, Fe, Al, Ni, Au, Mg, Cr and Pt in an amount of 0.06% or less, and at least one.

# Fig. 1

(a)

(b)

## Description

Technical Field

The present invention relates to an Sn-Ag-Cu-Bi-P solder alloy.

Background Art

Mounting boards on which electronic components are mounted are used for home appliances such as washing machines, refrigerators, and coolers, and electronic devices such as televisions, videos, radios, computers, copiers, and communication devices. As the mounting board, in addition to a single-layer board, a board obtained by laminating a plurality of boards in order to realize a substantial function is used.

Examples of conduction between the boards and mounting of the electronic component on the board include a method of connection by surface mounting and a method of mounting by inserting a terminal into a through hole of the board. Examples of the mounting process on the printed circuit board, such as those described above, include flow soldering, reflow soldering, and manual soldering etc. Among them, flow soldering is usually employed as a mounting process of an electronic component having a certain size.

For example, Patent Document 1 has conducted a study of forming a solder joint using flow soldering. The Sn-Ag-Cu-Bi-P solder alloy described in the same document can suppress the occurrence of dross, improve the bulk strength (tensile strength) due to the formation of an intermetallic compound by Ag, and improve the wettability by P. Patent Document 2 has conducted a study of the tensile strength, the wettability during flow soldering, the solidus-line temperature, the liquidus-line temperature, and the number of occurrences of bridges of the Sn-Ag-Cu-Bi-P solder alloy.

In addition, Sn-Ag-Cu-Bi-P solder alloys have been studied not only for flow soldering. Patent Document 3 discloses an Sn-Ag-Cu-Bi-P solder alloy for cream solder or rosin solder, and attempts to improve tensile strength, elongation, and thermal fatigue resistance characteristics. Patent Document 4 discloses an Sn-Ag-Cu-Bi-P-based solder alloy for solder balls, and studies drop impact resistance, yellowing, and heat cycle resistance.

Patent Document 5 discloses an Sn-Ag-Cu-Bi solder alloy in which heat cycle resistance is studied using a mounting substrate on which a solder paste is printed. Patent Document 6 discloses an Sn-Ag-Cu-Bi-P-based solder alloy in which the liquidus-line temperature and the solidus-line temperature are reviewed for pipe bonding and sealing.

Citation List

Patent Document

Patent Document 1: Japanese Unexamined Patent Application Publication No. 2007-7732
Patent Document 2: Japanese Unexamined Patent Application Publication No. 2000-288772
Patent Document 3: Japanese Unexamined Patent Application Publication No. H10-34376
Patent Document 4: Japanese Unexamined Patent Application Publication No. 2004-261863
Patent Document 5: Japanese Unexamined Patent Application Publication No. 2011-183430
Patent Document 6: Japanese Unexamined Patent Application Publication No. H2-70033

Summary of Invention

Technical Problem

Conventionally, various effects have been confirmed in the Sn-Ag-Cu-Bi-P solder alloy. Among them, the invention described in Patent Document 1 is an excellent invention exhibiting excellent wettability and high tensile strength. In paragraph 0008 of Patent Document 1, it is described that the tensile strength of the solder alloy is poor when cost reduction is attempted by reducing the content of expensive Ag as a conventional technique.

In fact, according to the examination result of paragraph 0027 of Patent Document 1, in Example 7 in which the Ag content is 2 mass%, the tensile strength is increased to about 2 times as compared with Example 4 in which the Ag content is 0.3 mass%. Here, this is considered to be because Ag and Sn form an intermetallic compound as described in paragraph 0020 of Patent Document 1. Therefore, according to the invention described in Patent Document 1, it is found that it is better to increase the Ag content in order to improve the tensile strength.

Also in the invention described in Patent Document 2, the tensile strength is studied, and it is disclosed that the Ag content is 2.0 to 5.0 mass%. Paragraph 0008 of Patent Document 2 discloses that when the Ag content is less than 2.0 mass%, the elongation is significantly reduced by the addition of Bi, and the properties as a solder material are not satisfied. That is, the invention described in Patent Document 2 reflects the conventional technique described in Patent Document 1, and according to the invention described in Patent Document 2, it is necessary to increase the Ag content to 2.0 mass% or more. In addition, in the invention described in Patent Document 2, the P and Ni contents have been studied in order to suppress the occurrence of bridges.

In the invention described in Patent Document 3, heat cycle resistance is also studied in addition to tensile strength and elongation. Patent Document 3 discloses only a solder alloy having an Ag content of 2.0% or more in Examples in order to avoid a decrease in tensile strength. That is, the invention described in Patent Document 3 reflects what is described and verified in Patent Documents 1 and 2.

Patent Document 4 discloses a solder alloy in which Ni is added to Sn-Ag-Cu-Bi-P in Examples. Unlike Patent Documents 1 to 3, the solder alloy described in Patent Document 4 does not examine the tensile strength; instead, the drop impact resistance is examined, and the Ag content is kept low in all the solder alloys of the Sn-Ag-Cu-Bi-P-Ni composition disclosed in Examples.

In the invention described in Patent Document 4, drop impact resistance has been studied as described above. According to Patent Document 4, it is necessary to suppress the Cu content to 0.3 mass% or less in order to improve drop impact resistance. Specifically, paragraph 0018 of Patent Document 4 describes that when the Cu content is up to 0.3 mass%, the intermetallic compound suppressing effect appears stronger than the increase in voids, resulting in improved resistance to drop impact. As described above, in the invention described in Patent Document 4, the Cu content is kept low in order to improve the drop impact resistance.

In the invention described in Patent Document 5, joint strength after a thermal shock test is examined as study of heat cycle resistance. Patent Document 5 discloses an Sn-Ag-Cu-Bi solder alloy as a specific alloy composition. Paragraph 0015 of Patent Document 5 describes that in order to improve heat cycle resistance, thermal stress resistance of a solder joint is improved by improving tensile strength of a solder alloy which contributes to improving a joint strength of the solder joint after the thermal shock test, instead of using a solder alloy as soft as possible.

Further, paragraph 0010 of Patent Document 5 describes that P may be contained as an element equivalent to Ge, Ga, and In. However, Patent Document 5 does not mention the contents of these elements. Paragraph 0012 of Patent Document 5 specifically discloses that the Ge, Ga, and In contents are in a range of 0.05 to 1.0 mass%. Therefore, even if P is added to the solder alloy described in Patent Document 5, the P content must be in the range of 0.05 to 1.0 mass%.

Patent Document 6 discloses Sn-Ag-Cu-Bi-P as a solder alloy for pipe bonding and sealing. Then, as such applications, it is also described that the Ag content is preferably 0.1 to 0.4 mass%. In all the alloy compositions actually examined as Examples in Patent Document 6, the Ag content is 0.4 mass% or less. This is presumed to be because the elongation of the solder alloy needs to be considered particularly for use as sealing, and therefore the tensile strength is intentionally reduced.

However, the inventions described in Patent Documents 1 to 6 need to be based on the actual situation of electronic devices that have achieved remarkable development in recent years. In particular, examples of problems to be focused on include chip standing that can occur at the time of mounting an electronic component and electromigration that can occur at the time of driving.

Chip standing is a phenomenon in which, when a solder alloy placed on an electrode melts by heating, if the solder alloy on one electrode starts melting earlier than the solder alloy on the other electrode, an electronic component such as a chip is attracted to the one electrode and also stands upright. This is because, as electronic devices have become lighter, thinner, and shorter in recent years, electronic components mounted on electronic devices have also reduced in size and weight, resulting in more frequent occurrence of chip standing.

In electromigration, downsizing of electronic components progresses, and as the current density during energization increases, the number of electrons moving in the solder joint also increases. Therefore, in recent years, problems have become apparent. Electromigration can be described as follows. Atoms constituting the solder joint collide with electrons that generate a current, and the momentum is transmitted from the electrons to the atoms. The atoms that have obtained the momentum in an electron flowing direction migrate along the flow of the electrons to the anode side of the solder joint. At this time, in the solder alloy containing Cu, Cu segregates on the anode side, and an empty lattice is generated on the cathode side of the solder joint. Such an empty lattice gradually expands and generates a void. When the void grows, the resistance value increases, and the solder joint generates heat due to Joule heat or the performance of the electronic component is hardly exhibited due to a decrease in current density. Finally, the solder joint is broken.

As described above, in recent years, in the Sn-Ag-Cu-Bi-P solder alloy, a solder alloy capable of suppressing chip standing and electromigration while maintaining various conventional characteristics is required. Therefore, in regard to the solder alloys described in Patent Documents 1 to 6, it is urgent to conduct studies based on the actual situation of electronic components in recent years.

An object of the present invention is to provide a solder alloy, a solder paste, a solder ball, a solder preform, and a solder joint which have excellent drop impact resistance and heat cycle resistance, can suppress the occurrence of chip standing, bridges and icicles, and can also suppress the occurrence of electromigration.

Solution to Problem

The present inventors have extracted Sn-Ag-Cu-Bi-P solder alloys that are considered to be able to solve the above problems among the Sn-Ag-Cu-Bi-P solder alloys specifically studied in Patent Documents 1 to 6, and conducted detailed studies. First, Sn-2Ag-0.5Cu-2Bi-0.005P in Example 7 of Patent Document 1 in which precipitation strengthening by Ag$_3$Sn is attempted, Sn-2.8Ag-0.5Cu-1.0Bi-0.005P-0.005Ni, etc., in Examples in Table 2 of Patent Document 2, Sn-2.8Ag-0.5Cu-1.0Bi-0.01P in Comparative Examples in Table 2 of Patent Document 2, Sn-2Ag-0.5Cu-5Bi-0.003P in Comparative Example 2 of Patent Document 3, and Sn-2Ag-0.5Cu-5Bi-0.001P-0.005Ni, etc., in Example 1 of Patent Document 3 were selected. Note that, in Examples and Comparative Examples extracted from Patent Documents 1 to 6, when the element content is represented by an integer, the first decimal place is regarded as 0. The same applies to the following.

Next, in order to improve the drop impact resistance, Sn-1Ag-0.05Cu-1Bi-0.005P-0.05Ni in Example 11 of Patent Document 4 in which the Cu content is kept low was selected. In addition, Sn-1.0Ag-0.5Cu-1.0Bi of Comparative Example 2 of Patent Document 5 which have a low content of Ag and are presumed to have improved drop impact resistance and Sn-0.2Ag-0.2Cu-3.8Bi of No. 3 of Patent Document 6 were selected.

First, in Example 7 of Patent Document 1, Comparative Example 2 and Example 1 of Patent Document 3, etc., due to a high content of Ag, it has been found that the drop impact resistance is poor. In each of Examples and Comparative Examples of Patent Document 2, due to a further high content of Ag, it has been found that chip standing frequently occurs in addition to drop impact resistance.

In Example 11 of Patent Document 4, due to a low content of Cu, it has been found that the heat cycle resistance was poor. In Comparative Example 2 of Patent Document 5, although the drop impact resistance was slightly improved as compared with Example 7 of Patent Document 1, etc., it has been found that bridges and icicles frequently occurred because P was not contained. In No. 3 of Patent Document 6, due to a low content of Ag, it has been found that the heat cycle resistance was poor.

In addition, in the above-described solder alloys disclosed in Patent Documents 2 and 6, in addition to the above-described findings, it has also been found that chip standing frequently occurs. Further, it has also been found that electromigration occurs in the above-described solder alloys disclosed in Patent Documents 4 and 6.

In view of the above findings, it is considered that it is not sufficient to simply increase the Ag content to precipitate a large amount of Ag$_3$Sn, but it is necessary to adjust the hardness to an appropriate level to improve the drop impact resistance and the heat cycle resistance. In addition, at the time of heating the solder alloy, in a temperature range higher than the solidus-line temperature, it is considered that it is necessary to adjust an alloy composition in which a large endotherm is observed in two stages when the thermal history is measured by a differential scanning calorimeter (DSC), and to suppress chip standing. Further, it is also considered that it is necessary to suppress the occurrence of bridges and icicles by adjusting the viscosity of the molten solder. Additionally, it is considered that electromigration resistance (hereinafter, simply referred to as "EM resistance") needs to be improved by precipitation of appropriate Ag$_3$Sn and solid solution strengthening of the solder alloy by Bi.

Here, the effect of the solder alloy is such that the effects of the individual constituent elements are not exhibited separately, but are comprehensively exhibited as one object while mutually contributing. Therefore, if each constituent element is individually adjusted in order to improve each characteristic, various effects cannot be simultaneously exhibited with one composition.

Therefore, the present inventors have searched for the composition of the Sn-Ag-Cu-Bi-P solder alloy in detail in view of the above findings, etc. As a result, only when each constituent element is within a predetermined range, a solder alloy is obtained which has excellent drop impact resistance and heat cycle resistance, can suppress the occurrence of chip standing, bridges and icicles, and can also suppress the occurrence of electromigration, whereby the present invention has been completed.

The present invention obtained by these findings is as follows.

(0) A solder alloy consisting of, by mass%, Ag: 0.3 to 1.9%, Cu: 0.40 to 1.00%, Bi: 0.5 to 4.9%, P: 0.00100 to 0.02000%, with the balance being Sn.

(1) A solder alloy having an alloy composition consisting of, by mass%, Ag: 0.3 to 1.9%, Cu: 0.40 to 1.00%, Bi: 0.5 to 4.9%, P: 0.00100 to 0.02000%, with the balance being Sn.

(2) The solder alloy according to (0) or (1) above, wherein the alloy composition further comprises, by mass%, each of Ge, Co, and Ga in an amount of 0.06% or less, and at least one.

(3) The solder alloy according to any one of (0) to (2) above, wherein the alloy composition further comprises, by mass%, each of As, In, Zr, Mn, Ti, Zn, Fe, Al, Au, Mg, Cr, and P in an amount of 0.06% or less, and at least one.

(4) The solder alloy according to any one of (0) to (2) above, wherein the alloy composition further comprises, by mass%, each of As, In, Zr, Mn, Ti, Zn, Fe, Al, Ni, Au, Mg, Cr, and Pt in an amount of 0.06% or less, and at least one.

(5 to 6) The solder alloy according to any one of (0) to (4) above, wherein the alloy composition satisfies the following Relations (1) to (3):

$$0.0007 \leq Ag \times Cu \times Bi \times P \leq 0.0110 \qquad \text{Relation (1)}$$

$$110 \leq Ag/(P \times Cu) \leq 799 \qquad \text{Relation (2)}$$

$$0.67 \leq (Ag+Bi)/(Ag+Cu+Bi) \leq 0.91 \qquad \text{Relation (3)}$$

wherein Ag, Cu, Bi and P in the Relations (1) to (3) above represent the contents thereof as mass% in the alloy composition.

(7 to 8) A solder paste comprising a solder powder consisting of the solder alloy according to any one of (0) to (6) above.

(9 to 10) A solder ball consisting of the solder alloy according to any one of (0) to (6) above.

(11 to 12) A solder preform consisting of the solder alloy according to any one of (0) to (6) above.

(13 to 14) A solder joint comprising the solder alloy according to any one of (0) to (6) above.

Brief Description of Drawings

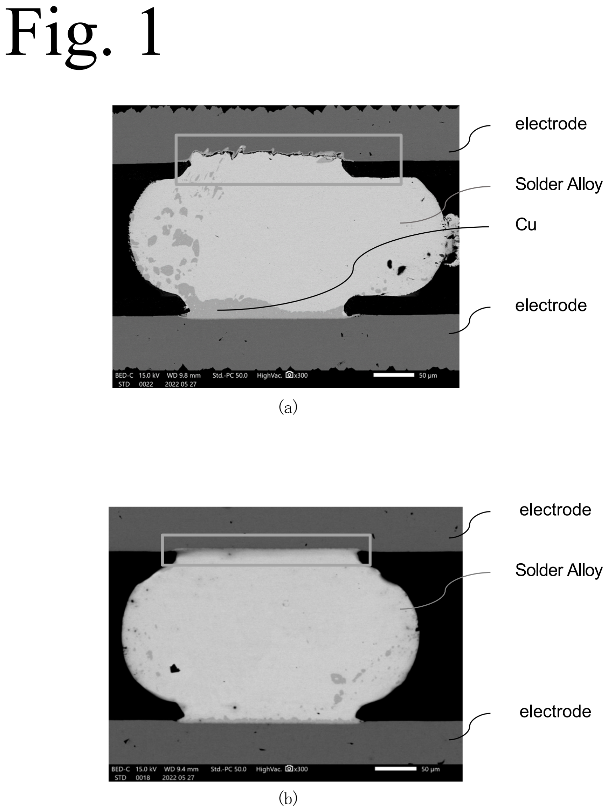

FIG. 1 FIG. 1 is a cross-sectional SEM photograph of a solder joint, FIG. 1(a) illustrates Comparative Example 1, and FIG. 1(b) illustrates Example 22.

Description of Embodiments

The present invention will be described in greater detail below. In the present specification, "%" used for indicating an alloy composition of the solder alloy is "mass%" unless otherwise specified.

1. Solder Alloy

(1) Ag: 0.3 to 1.9%

Ag is an element that improves drop impact resistance, heat cycle resistance and EM resistance, and suppresses chip standing. Ag can suppress deformation of the solder alloy by precipitation strengthening of $Ag_3Sn$, and thus contributes to improvement of heat cycle resistance and drop impact resistance. In addition, due to precipitation of $Ag_3Sn$, electron transfer is inhibited and EM resistance is improved. Furthermore, in the thermal history using DSC, two large endothermic peaks are shown between the solidus-line temperature and the liquidus-line temperature during heating.

When the Ag content is less than 0.3%, due to an insufficient precipitation amount of $Ag_3Sn$, the heat cycle resistance and the EM resistance deteriorate. In addition, chip standing frequently occurs. In terms of the lower limit, the Ag content is 0.3% or more, preferably 0.4% or more, more preferably 0.5% or more, and further preferably 0.6% or more.

On the other hand, when the Ag content is more than 1.9%, $Ag_3Sn$ is formed in a network shape, and therefore drop impact resistance deteriorates. In addition, when the Ag content is 2.5% or more, there is one endothermic peak, and chip standing frequently occurs. In terms of the upper limit, the Ag content is 1.9% or less, preferably 1.7% or less, more preferably 1.6% or less, further preferably 1.4% or less, still further preferably 1.3% or less, particularly preferably 1.2% or less, and most preferably 1.1% or less.

The preferred range of Ag is 0.6 to 1.4%. The above upper limit and lower limit can define a further preferable range of the Ag content.

(2) Cu: 0.40 to 1.00%

Cu is an element that improves heat cycle resistance and EM resistance, and also suppresses the occurrence of bridges and icicles. $Cu_6Sn_5$ formed from Cu and Sn is finely precipitated on the joint interface, so that the joint interface is not broken even by thermal stress due to a temperature difference. In addition, when the Cu content is 0.40 to 1.00%, it is close to the eutectic composition of Sn and Cu, and the rise in the liquidus-line temperature is suppressed, so that the occurrence of bridges and icicles can be suppressed. Furthermore, since the intermetallic compound formed from Cu and Sn inhibits electron transfer, EM resistance is improved.

When the Cu content is less than 0.40%, due to an insufficient precipitation amount of fine $Cu_6Sn_5$, the heat cycle

resistance and the EM resistance deteriorate. In terms of the lower limit, the Cu content is 0.40% or more, preferably 0.50% or more.

On the other hand, when the Cu content is more than 1.00%, the liquidus-line temperature increases, and the viscosity of the molten solder increases when bonding is performed at a normal temperature, so that bridges and icicles frequently occur. In terms of the upper limit, the Cu content is 1.0% or less, preferably 0.90% or less, more preferably 0.80% or less, further preferably 0.70% or less, and still further preferably 0.60% or less.
The preferred range of Cu is 0.40 to 0.70%. The above upper limit and lower limit can define a further preferable range of the Cu content.

(3) Bi: 0.5 to 4.9%

Bi is an element that contributes to improvement in drop impact resistance and EM resistance. Since Bi dissolves in Sn, the crystal lattice of Sn is distorted due to solid solution strengthening of Sn, and movement of Cu is hindered, thereby improving EM resistance.

When the Bi content is less than 0.5%, solid solution strengthening of Sn becomes insufficient, and EM resistance deteriorates. In terms of the lower limit, the Bi content is 0.5% or more, preferably 0.6% or more, more preferably 0.7% or more, further preferably 0.8% or more, particularly preferably 0.9% or more, and most preferably 1.0% or more.

On the other hand, when the Bi content is more than 4.9%, Bi content is more than the solid solubility limit of Bi, thus Bi segregates, and the solder alloy is poor in drop impact resistance due to hardening or embrittlement. In terms of the upper limit, the Bi content is 4.9% or less, preferably 3.7% or less, more preferably 2.9% or less, further preferably 2.0% or less, still further preferably 1.9% or less, particularly preferably 1.5% or less, and most preferably 1.1% or less.

The preferred range of Bi is 0.5 to 3.7%. The above upper limit and lower limit can define a further preferable range of the Bi content.

(4) P: 0.00100 to 0.02000%

P is an element that suppresses the occurrence of bridges and icicles. Since P accumulates on the surface of the molten solder and inhibits the production of tin oxide, the fluidity of the molten solder is appropriately maintained. Therefore, it is possible to suppress the occurrence of bridges and icicles that may occur at the time of solidification.

When the P content is less than 0.00100%, the generation of tin oxide cannot be suppressed, and bridges and icicles frequently occur. In terms of the lower limit, the P content is 0.00100% or more, preferably 0.00200% or more, and more preferably 0.00300% or more.

On the other hand, when the P content is more than 0.0200%, an intermetallic compound of P precipitates, and thus bridges and icicles frequently occur. In terms of the upper limit, the P content is 0.0200% or less, preferably 0.0170% or less, more preferably 0.0160% or less, further preferably 0.0150% or less, still further preferably 0.0110% or less, particularly preferably 0.00900% or less, and most preferably 0.00600% or less, or 0.00400% or less.

The preferred range of P is 0.00300 to 0.0200%. The above upper limit and lower limit can define a further preferable range of the P content.

(5) At least one of Ge, Co, and Ga in an amount of 0.06% or less in total, and at least one

The solder alloy according to the present invention may contain Ge, Co, and Ga as optional elements in order to suppress oxidation of the solder alloy. When each content of the solder alloys containing these elements is 0.06% or less, an increase in the liquidus-line temperature can be suppressed, so that the occurrence of bridges and icicles can be further suppressed. Each content is preferably 0.006% or less, and more preferably 0.005% or less. The lower limit value is not particularly limited, but may be required to be 0.001% or more. In addition, when a plurality of at least one of these optional elements is contained in one composition, the content may be required to be 0.1% or less in total. The lower limit of the total amount may be required to be 0.001% or more.

(6) Each of As, In, Zr, Mn, Ti, Zn, Fe, Al, Ni, Au, Mg, Cr, and Pt in an amount of 0.06% or less, and at least one

The solder alloy according to the present invention may contain at least one of As, In, Zr, Mn, Ti, Zn, Fe, Al, Ni, Au, Mg, Cr, and Pt as an optional element as long as the above-described effects are not impaired. The alloy composition may further contain, by mass%, each of As, In, Zr, Mn, Ti, Zn, Fe, Al, Ni, Au, Mg, Cr, and Pt in an amount of 0.06% or less. Among these optional elements, an element group excluding Ni, which is an element that rapidly increases the melting point with a low content from among the optional elements is more preferable. Specifically, the alloy composition may further contain, by mass%, each of As, In, Zr, Mn, Ti, Zn, Fe, Al, Au, Mg, Cr, and Pt in an amount of 0.06% or less, and at least one of As, In, Zr, Mn, Ti, Zn, Fe, Al, Au, Mg, Cr, and Pt.

When the alloy composition contains at least one of As, In, Zr, Mn, Ti, Zn, Fe, Al, Ni, Au, Mg, Cr, and Pt are contained, the upper limit of the content of each constituent element is preferably 0.06% or less. The lower limit is not particularly limited, but may be required to be 0.001% or more. In addition, when a plurality of at least one of these optional elements is contained in one composition, the content may be required to be 0.1% or less in total. The lower limit of the total amount may be required to be 0.001% or more.

(6) Relations (1) to (3)

$$0.0007 \leqq Ag \times Cu \times Bi \times P \leqq 0.0110 \quad \text{Relation (1)}$$

$$110 \leqq Ag/(P \times Cu) \leqq 799 \quad \text{Relation (2)}$$

$$0.67 \leqq (Ag+Bi)/(Ag+Cu+Bi) \leqq 0.91 \quad \text{Relation (3)}$$

wherein Ag, Cu, Bi and P in the Relations (1) to (3) above represent the contents (mass%) thereof in the alloy composition.

The constituent elements of the solder alloy according to the present invention have excellent drop impact resistance and heat cycle resistance, can suppress the occurrence of chip standing, bridges and icicles, and can also suppress the occurrence of electromigration. In order to simultaneously exert these effects at a higher level in one composition, it is more preferable to satisfy Relations (1) to (3) in addition to the fact that each content of constituent element is within the above-described range. The technical significance of each Relation is as follows.

The Relation (1) is a relational expression in consideration of the balance of the contents of essential elements. The Relation (2) is a relational expression relating to the Ag, Cu, and P contents, and these elements are a group of elements capable of forming an intermetallic compound in the solder alloy according to the present invention. Since the intermetallic compound can affect various characteristics of the present invention depending on the location, form, size, etc., at which the intermetallic compound precipitates, a solder alloy satisfying the Relation (2) can exhibit particularly excellent effects at one composition. The Relation (3) defines elements for improving strengthening of the solder alloy according to the present invention. Ag and Bi are elements that contribute to drop impact resistance. Ag, Cu, and Bi are elements that contribute to EM resistance and heat cycle resistance, and in order to raise each characteristic to a high level in a well-balanced manner, it is preferable to satisfy the Relation (3).

In terms of the upper limit, the Relation (1) is preferably 0.0110 or less, more preferably 0.0094 or less, further preferably 0.0088 or less, still further preferably 0.0083 or less, particularly preferably 0.0081 or less, and most preferably selected from 0.0061 or less, 0.0050 or less, 0.0048 or less, 0.0033 or less, and 0.0031 or less. In terms of the lower limit, the Relation (1) is preferably 0.0007 or more, more preferably 0.0009 or more, further preferably 0.0010 or more, still further preferably 0.0011 or more, particularly preferably 0.0013 or more, and most preferably selected from 0.0014 or more, 0.0015 or more, 0.0017 or more, 0.0018 or more, 0.0020 or more, 0.0021 or more, 0.0022 or more, 0.0023 or more, 0.0025 or more, 0.0026 or more, and 0.0029 or more.

The further preferred range of the Relation (1) is 0.0017 to 0.0088. The above upper limit and lower limit can respectively define a further preferable range of the Relation (1).

In terms of the upper limit, the Relation (2) is preferably 799 or less, more preferably 733 or less, further preferably 611 or less, still further preferably 600 or less, particularly preferably 550 or less, and most preferably selected from 524 or less, 458 or less, and 400 or less. In terms of the lower limit, the Relation (2) is preferably 110 or more, more preferably 129 or more, further preferably 138 or more, still further preferably 147 or more, particularly preferably 200 or more, and most preferably selected from 244 or more, 267 or more, and 367 or more.

The further preferred range of the Relation (2) is 138 to 733. The above upper limit and lower limit can respectively define a further preferable range of the Relation (2).

In terms of the upper limit, the Relation (3) is preferably 0.91 or less, more preferably 0.89 or less, further preferably 0.86 or less, still further preferably 0.85 or less, particularly preferably 0.84 or less, and most preferably selected from 0.83 or less and 0.81 or less. In terms of the lower limit, the Relation (3) is preferably 0.67 or more, more preferably 0.68 or more, further preferably 0.72 or more, still further preferably 0.74 or more, particularly preferably 0.75 or more, and most preferably selected from 0.76 or more, 0.77 or more, 0.78 or more, 0.79 or more, and 0.80 or more.

The further preferred range of the Relation (3) is 0.76 to 0.89. The above upper limit and lower limit can respectively define a further preferable range of the Relation (3).

In the calculation of Relations (1) to (3), the numerical values as shown in Tables 1 and 2, which are measured values of the alloy composition, have been used. For the values calculated by the Relations (1) to (3), the Relation (1) calculates up to the fourth decimal place, the Relation (2) calculates up to the first digit of the integer, and the Relation (3) calculates up to the second decimal place. This calculation rule is used in this application and further, is intended to be used as well for calculations relating to further solder alloys as described in other documents, etc., since all solder alloys must be handled in the same way.

(7) Balance: Sn

The balance of the solder alloy according to the present invention is Sn. In addition to the above-described elements, unavoidable impurity may be contained. Even when unavoidable impurity is contained, it does not affect the above-described effects. In addition, as described later, even when an element that is not contained in the present invention is contained as an inevitable impurity, it does not influence the above-described effects.

2. Solder Paste

A solder paste according to the present invention is a mixture of a solder powder consisting of the alloy composition described above and a flux. A flux to be used in the present invention is not particularly limited as long as soldering by an ordinary method is possible. Therefore, a flux appropriately blended with rosin, an organic acid, an activator, and a solvent which are generally used, may be used. Blending ratios of the metal powder component and the flux component in the present invention are preferably the metal powder component: 70 to 90 mass%, the flux component: 10 to 30 mass%, although not particularly limited.

3. Solder Ball

The solder alloy according to the present invention can be used as a solder ball. When the solder alloy is used as a solder ball, the solder ball can be produced from the solder alloy according to the present invention by using a dropping method as a common method in the art. In addition, a solder joint can be produced by processing by a common method in the art, such as mounting and bonding solder balls on an electrode on which a flux is printed. A grain size of the solder ball is preferably 1 $\mu$m or more, more preferably 10 $\mu$m or more, further preferably 20 $\mu$m or more, and particularly preferably 30 $\mu$m or more. An upper limit of the grain size of the solder ball is preferably 3000 $\mu$m or less, more preferably 1000 $\mu$m or less, further preferably 800 $\mu$m or less, and particularly preferably 600 $\mu$m or less.

4. Solder Preform

The solder alloy according to the present invention can be used as a preform. Examples of a form of the preform include a washer, a ring, a pellet, a disc, a ribbon, a wire, etc. It can also be used as a bar solder.

5. Solder Joint

A solder joint according to the present invention is preferably used to join at least two or more of to-be-joined members. The to-be-joined members are not particularly limited as long as they are electrically connected by using the solder alloy according to the present invention, for example, devices, boards, electronic components, printed circuit boards, insulated boards, heat sinks, lead frames, semiconductor using electrode terminals and, power module, and inverter products, etc.

A bonding method using the solder alloy according to the present invention is performed in the usual manner by using, for example, a reflow method. A melting temperature of the solder alloy when flow soldering is performed may be a temperature approximately 20°C higher than the liquidus-line temperature. In addition, in the case of bonding using the solder alloy according to the present invention, the alloy structure can be made finer taking a cooling rate for solidification into consideration. For example, a solder joint is cooled at a cooling rate of 2 to 3°C/s or more. Other bonding conditions can be adjusted as appropriate according to the alloy composition of the solder alloy.

6. Application

The solder alloy according to the present invention can exhibit an effect by being used particularly for flow soldering among various soldering methods. This is effective when flow soldering is performed on a laminated substrate in which a plurality of substrates are laminated. The composition of the jet solder in flow soldering may change when the jet solder is used for a long period of time, and thus the solder alloy can also be used as a replenishment solder for obtaining a desired composition of the jet solder. In this case, the replenishment solder can be replenished by adjusting the composition within the scope of the present invention. The temperature of the jet solder in the case of performing flow soldering is approximately 230 to 260°C. In addition, the other bonding conditions can be appropriately adjusted according to the alloy composition, the solid phase ratio, and the liquid phase ratio of the solder alloy.

7. Solder Alloy Producing Method

The solder alloy according to the present invention may be produced by previously producing a SnAg alloy and an SnCu alloy and melting the SnAg alloy and the SnCu alloy together with Bi and P. As a production example, an alloy of Sn and Ag and an alloy of Sn and Cu may be produced, each alloy may be weighed so as to be a predetermined amount, and Bi and P may be weighed. The reason for producing in this manner can be described as follows. It takes a lot of time to dissolve Ag having a melting point of about 860°C and Cu having a melting point of about 1100°C in Sn. In particular, surface oxidation of Cu is remarkable, and therefore Cu is affected by oxidation when the dissolution time is long. On the other hand, if a SnAg alloy in which Ag is dissolved in Sn in advance and an SnCu alloy in which Cu is dissolved in Sn in advance are each fabricated in advance, the dissolution time in Sn can be significantly shortened. Regarding the intermetallic compound formed at the time of fabricating each alloy, for example, the melting point of $Cu_6Sn_5$ is 415°C, the melting point of $Ag_3Sn$ is 480°C, and these intermetallic compounds are mainly formed inside the alloy, and thus it is considered that there is little concern about oxidation.

As the solder alloy according to the present invention, by using a low $\alpha$ dose material as a raw material, a low $\alpha$ dose alloy can be produced. Such a low $\alpha$ dose alloy can prevent a soft error when used for forming solder bumps around a memory.

[Examples]

Using solder alloys having an alloy composition shown in Tables 1 and 2, a drop impact test (DROP) was judged as Evaluation 1, a heat cycle resistance test (TCT) was judged as Evaluation 2, chip standing was judged as Evaluation 3, bridges and icicles were judged as Evaluation 4, and EM resistance was judged as Evaluation 5. Each of the evaluation methods is described below.

Evaluation 1: Drop Impact Test (DROP)

Each of the solder alloys shown in Table 1 and Table 2 was atomized to obtain a solder powder. A soldering flux ("GLV" manufactured by SMIC) containing rosin, a solvent, an activator, a thixotropic agent, an organic acid, etc., was mixed to fabricate a solder paste of each solder alloy. The alloy powder in the solder paste was set to 88 mass%, and the flux was set to 12 mass%.

The solder paste was printed on a printed circuit board (material: FR-4) having a thickness of 0.8 mm with a metal mask having a thickness of 100 μm, then five BGA components were mounted on each board with a mounter, and reflow-soldering was performed under conditions of a maximum temperature of 240°C and a retention time of 60 seconds to fabricate two test boards. Thereafter, the board was divided into individual pieces (the board was divided into 5 pieces) for each BGA component to obtain a total of 10 evaluation samples.

Next, both ends of the evaluation sample were fixed to the pedestal with bolts so that the BGA component faces the pedestal side. In this state, the drop impact resistance was judged by applying an impact with an acceleration of 1500G while measuring the electric resistance value according to the JEDEC standard. The situation in which the crack was developing was judged by the number of drops until the electric resistance value increased by 50% from the initial value. When the number of drops was 100 or more, it was judged as "Excellent". When the number of drops was 90 or more and less than 100, it was judged as "Good". When the number of drops was less than 90 times, it was judged as "Poor".

Evaluation 2: Heat Cycle Resistance Test (TCT)

A solder paste was fabricated in the same manner as in Evaluation 1. The fabricated test board was placed in a heat cycle test apparatus set under conditions of a low temperature of -40°C, a high temperature of +125°C, and a retention time of 10 minutes, and the number of cycles at the time when the resistance value of at least one BGA component being more than 15 Ω was determined from 3 to 5 Ω as an initial resistance value. When the number of cycles was 700 or more, it was judged as "Excellent". When the number of cycles was 650 to 699, it was judged as "Good". When the number of cycles was less than 650, it was judged as "Poor".

Evaluation 3: Chip standing

A solder paste was fabricated in the same manner as in Evaluation 1. This solder paste was applied by printing onto a Cu land of a 6-layer printed circuit board (FR-4, Cu-OSP) with a 150 μm metal mask, and then 12 3216-chip resistors were mounted with a mounter. Thereafter, a test board was fabricated by performing soldering by reflow by melting the solder paste under heating conditions where the maximum temperature was 245°C and the retention time was 40 seconds. The number of chip standing after mounting was counted. When the number of chip standing was 0, it was judged as "Excellent". When the number of chip standing was 1, it was judged as "Good". When the number of chip standing was 2 or more, it was judged as "Poor".

Evaluation 4: Bridges and Icicles

First, twelve 4-terminal Sn-plating resistors having a terminal width of 0.5 mm and a terminal spacing of 0.8 mm were prepared, the terminals were inserted into through-holes of a glass epoxy printed board (CEM-3), and solder alloys shown in Tables 1 and 2 were introduced into a solder bath to perform flow soldering. For the flow soldering, flow soldering was performed using a flow simulator FS-1 manufactured by Malcom Co., Ltd. under the following test conditions.

Test Conditions

Solder bath: Flow simulator FS-1 manufactured by Malcom Co., Ltd.
Solder amount: 15kg
Flux: Flux manufactured by SMIC (product name: ES-1061SP2)
Solder temperature in solder bath: 255°C

Whether or not a bridge occurred was visually judged. In addition, it was visually confirmed whether or not an icicle occurred in the fillet. When a bridge or icicle could not be confirmed, it was judged as "Excellent", when the number of resistors in which a bridge or icicle was generated was 1 or 2, it was judged as "Good", and when the number of resistors in which a bridge or icicle was generated was 3 or more, it was judged as "Poor".

Evaluation 5: EM Resistance

For the EM test sample, solder balls made of solder alloys shown in Tables 1 and 2 having a diameter of 0.24 mm were used, and reflow soldering was performed using a watersoluble flux on a package board having a size of 12 mm $\times$ 12 mm having a Cu electrode with a diameter of 0.24 mm to fabricate a package. Thereafter, a solder paste having a composition of Sn-3.0Ag-0.5Cu was printed on a glass epoxy substrate (FR-4) having a size of 29 mm $\times$ 19 mm and a thickness of 0.8 mm, the package fabricated above was mounted, and a reflow soldered test board was prepared under the conditions of a maximum temperature of 240°C and a retention time of 90 seconds.
The fabricated test board was connected to a compact variable switching power supply (PAK-A manufactured by KIKUSUI ELECTRONICS CORPORATION), and the test board was energized in a silicon oil bath maintained at 125°C under the condition that the current density was 100 A/mm$^2$ and the voltage was 5.0 V. During energization, an electric resistance of the sample was continuously measured, and a time required until the resistance increased by 150% from the initial resistance value was measured. A case where the time was more than 350 hours was judged as "Excellent", a case where the time was 300 to 350 hours was judged as "Good", and a case where the time was less than 300 hours is judged as "Poor". The evaluation results are shown in Tables 1 and 2.

[Table 1]

| | Alloy composition (mass%) | | | | | | Relation (1) Ag×Cu×-Bi×P | Relation (2) Ag/(P×Cu) | Relation (3) (Ag+Bi)/(Ag+Cu+Bi) | Evaluation1 Drop | Evaluation2 TCT | Evaluation3 Chip standing | Evaluation4 Bridges and icicles | Evaluation5 EM resistance | Overall evaluation |
|---|---|---|---|---|---|---|---|---|---|---|---|---|---|---|---|
| | Sn | Ag | Cu | Bi | P | Optional element | | | | | | | | | |
| Example1 | bal. | 0.3 | 0.50 | 1.0 | 0.0030 | | 0.0005 | 200 | 0.72 | Excellent | Good | Good | Excellent | Good | Good |
| Example2 | bal. | 0.4 | 0.50 | 1.0 | 0.0030 | | 0.0006 | 267 | 0.74 | Excellent | Good | Good | Excellent | Good | Good |
| Example3 | bal. | 0.6 | 0.50 | 1.0 | 0.0030 | | 0.0009 | 400 | 0.76 | Excellent | Excellent | Excellent | Excellent | Excellent | Excellent |
| Example4 | bal. | 0.9 | 0.50 | 1.0 | 0.0030 | | 0.0014 | 600 | 0.79 | Excellent | Excellent | Excellent | Excellent | Excellent | Excellent |
| Example5 | bal. | 1.2 | 0.50 | 1.0 | 0.0030 | | 0.0018 | 800 | 0.81 | Good | Excellent | Excellent | Excellent | Excellent | Good |
| Example6 | bal. | 1.4 | 0.50 | 1.0 | 0.0030 | | 0.0021 | 933 | 0.83 | Good | Excellent | Excellent | Excellent | Excellent | Good |
| Example7 | bal. | 1.7 | 0.50 | 1.0 | 0.0030 | | 0.0026 | 1133 | 0.84 | Good | Excellent | Good | Excellent | Excellent | Good |
| Example8 | bal. | 1.9 | 0.50 | 1.0 | 0.0030 | | 0.0029 | 1267 | 0.85 | Good | Excellent | Good | Excellent | Excellent | Good |
| Example9 | bal. | 1.1 | 0.40 | 1.0 | 0.0030 | | 0.0013 | 917 | 0.84 | Excellent | Good | Excellent | Excellent | Good | Good |
| Example10 | bal. | 1.1 | 0.60 | 1.0 | 0.0030 | | 0.0020 | 611 | 0.78 | Excellent | Excellent | Excellent | Excellent | Excellent | Excellent |
| Example11 | bal. | 1.1 | 0.70 | 1.0 | 0.0030 | | 0.0023 | 524 | 0.75 | Excellent | Excellent | Excellent | Excellent | Excellent | Excellent |
| Example12 | bal. | 1.1 | 0.80 | 1.0 | 0.0030 | | 0.0026 | 458 | 0.72 | Excellent | Excellent | Excellent | Excellent | Excellent | Excellent |
| Example13 | bal. | 1.1 | 1.00 | 1.0 | 0.0030 | | 0.0033 | 367 | 0.68 | Excellent | Excellent | Excellent | Excellent | Excellent | Excellent |
| Example14 | bal. | 1.1 | 0.50 | 0.5 | 0.0030 | | 0.0008 | 733 | 0.76 | Excellent | Excellent | Excellent | Excellent | Excellent | Excellent |
| Example15 | bal. | 1.1 | 0.50 | 0.6 | 0.0030 | | 0.0010 | 733 | 0.77 | Excellent | Excellent | Excellent | Excellent | Excellent | Excellent |
| Example16 | bal. | 1.1 | 0.50 | 0.9 | 0.0030 | | 0.0015 | 733 | 0.80 | Excellent | Excellent | Excellent | Excellent | Excellent | Excellent |
| Example17 | bal. | 1.1 | 0.50 | 1.1 | 0.0030 | | 0.0018 | 733 | 0.81 | Excellent | Excellent | Excellent | Excellent | Excellent | Excellent |
| Example18 | bal. | 1.1 | 0.50 | 1.5 | 0.0030 | | 0.0025 | 733 | 0.84 | Excellent | Excellent | Excellent | Excellent | Excellent | Excellent |
| Example19 | bal. | 1.1 | 0.50 | 1.9 | 0.0030 | | 0.0031 | 733 | 0.86 | Excellent | Excellent | Excellent | Excellent | Excellent | Excellent |
| Example20 | bal. | 1.1 | 0.50 | 2.0 | 0.0030 | | 0.0033 | 733 | 0.86 | Excellent | Excellent | Excellent | Excellent | Excellent | Excellent |
| Example21 | bal. | 1.1 | 0.50 | 2.9 | 0.0030 | | 0.0048 | 733 | 0.89 | Excellent | Excellent | Excellent | Excellent | Excellent | Excellent |
| Example22 | bal. | 1.1 | 0.50 | 3.7 | 0.0030 | | 0.0061 | 733 | 0.91 | Excellent | Excellent | Excellent | Excellent | Excellent | Excellent |
| Example23 | bal. | 1.1 | 0.50 | 4.9 | 0.0030 | | 0.0081 | 733 | 0.92 | Good | Excellent | Excellent | Excellent | Excellent | Good |
| Example24 | bal. | 1.1 | 0.50 | 1.0 | 0.0010 | | 0.0006 | 2200 | 0.81 | Excellent | Excellent | Excellent | Good | Excellent | Good |
| Example25 | bal. | 1.1 | 0.50 | 1.0 | 0.0020 | | 0.0011 | 1100 | 0.81 | Excellent | Excellent | Excellent | Good | Excellent | Good |
| Example26 | bal. | 1.1 | 0.50 | 1.0 | 0.0030 | | 0.0017 | 733 | 0.81 | Excellent | Excellent | Excellent | Excellent | Excellent | Excellent |

(continued)

| | Alloy composition (mass%) | | | | | | Relation (1) Ag×Cu×Bi×P | Relation (2) Ag/(P×Cu) | Relation (3) (Ag+Bi)/(Ag+Cu+Bi) | Evaluation1 Drop | Evaluation2 TCT | Evaluation3 Chip standing | Evaluation4 Bridges and icicles | Evaluation5 EM resistance | Overall evaluation |
|---|---|---|---|---|---|---|---|---|---|---|---|---|---|---|---|
| | Sn | Ag | Cu | Bi | P | Optional element | | | | | | | | | |
| Example27 | bal. | 1.1 | 0.50 | 1.0 | 0.0040 | | 0.0022 | 550 | 0.81 | Excellent | Excellent | Excellent | Excellent | Excellent | Excellent |
| Example28 | bal. | 1.1 | 0.50 | 1.0 | 0.0060 | | 0.0033 | 367 | 0.81 | Excellent | Excellent | Excellent | Excellent | Excellent | Excellent |
| Example29 | bal. | 1.1 | 0.50 | 1.0 | 0.0090 | | 0.0050 | 244 | 0.81 | Excellent | Excellent | Excellent | Excellent | Excellent | Excellent |
| Example30 | bal. | 1.1 | 0.50 | 1.0 | 0.0110 | | 0.0061 | 200 | 0.81 | Excellent | Excellent | Excellent | Excellent | Excellent | Excellent |
| Example31 | bal. | 1.1 | 0.50 | 1.0 | 0.0150 | | 0.0083 | 147 | 0.81 | Excellent | Excellent | Excellent | Excellent | Excellent | Excellent |
| Example32 | bal. | 1.1 | 0.50 | 1.0 | 0.0160 | | 0.0088 | 138 | 0.81 | Excellent | Excellent | Excellent | Excellent | Excellent | Excellent |
| Example33 | bal. | 1.1 | 0.50 | 1.0 | 0.0170 | | 0.0094 | 129 | 0.81 | Excellent | Excellent | Excellent | Excellent | Excellent | Excellent |
| Example34 | bal. | 1.1 | 0.50 | 1.0 | 0.0200 | | 0.0110 | 110 | 0.81 | Excellent | Excellent | Excellent | Excellent | Excellent | Excellent |
| Example35 | bal. | 1.1 | 0.50 | 1.0 | 0.0030 | Ge : 0.05 | 0.0017 | 733 | 0.81 | Excellent | Excellent | Excellent | Excellent | Excellent | Excellent |
| Example36 | bal. | 1.1 | 0.50 | 1.0 | 0.0030 | Co : 0.05 | 0.0017 | 733 | 0.81 | Excellent | Excellent | Excellent | Excellent | Excellent | Excellent |
| Example37 | bal. | 1.1 | 0.50 | 1.0 | 0.0030 | Ga : 0.05 | 0.0017 | 733 | 0.81 | Excellent | Excellent | Excellent | Excellent | Excellent | Excellent |
| Example38 | bal. | 1.1 | 0.50 | 1.0 | 0.0030 | As : 0.05 | 0.0017 | 733 | 0.81 | Excellent | Excellent | Excellent | Excellent | Excellent | Excellent |
| Example39 | bal. | 1.1 | 0.50 | 1.0 | 0.0030 | In : 0.05 | 0.0017 | 733 | 0.81 | Excellent | Excellent | Excellent | Excellent | Excellent | Excellent |
| Example40 | bal. | 1.1 | 0.50 | 1.0 | 0.0030 | Zr : 0.05 | 0.0017 | 733 | 0.81 | Excellent | Excellent | Excellent | Excellent | Excellent | Excellent |
| Example41 | bal. | 1.1 | 0.50 | 1.0 | 0.0030 | Mn : 0.05 | 0.0017 | 733 | 0.81 | Excellent | Excellent | Excellent | Excellent | Excellent | Excellent |
| Example42 | bal. | 1.1 | 0.50 | 1.0 | 0.0030 | Ti : 0.05 | 0.0017 | 733 | 0.81 | Excellent | Excellent | Excellent | Excellent | Excellent | Excellent |
| Example43 | bal. | 1.1 | 0.50 | 1.0 | 0.0030 | Zn:0.05 | 0.0017 | 733 | 0.81 | Excellent | Excellent | Excellent | Excellent | Excellent | Excellent |
| Example44 | bal. | 1.1 | 0.50 | 1.0 | 0.0030 | Fe:0.05 | 0.0017 | 733 | 0.81 | Excellent | Excellent | Excellent | Excellent | Excellent | Excellent |
| Example45 | bal. | 1.1 | 0.50 | 1.0 | 0.0030 | Al:0.05 | 0.0017 | 733 | 0.81 | Excellent | Excellent | Excellent | Excellent | Excellent | Excellent |
| Example46 | bal. | 1.1 | 0.50 | 1.0 | 0.0030 | Ni : 0.05 | 0.0017 | 733 | 0.81 | Excellent | Excellent | Excellent | Good | Excellent | Good |
| Example47 | bal. | 1.1 | 0.50 | 1.0 | 0.0030 | Au : 0.05 | 0.0017 | 733 | 0.81 | Excellent | Excellent | Excellent | Excellent | Excellent | Excellent |
| Example48 | bal. | 1.1 | 0.50 | 1.0 | 0.0030 | Mg : 0.05 | 0.0017 | 733 | 0.81 | Excellent | Excellent | Excellent | Excellent | Excellent | Excellent |
| Example49 | bal. | 1.1 | 0.50 | 1.0 | 0.0030 | Cr : 0.05 | 0.0017 | 733 | 0.81 | Excellent | Excellent | Excellent | Excellent | Excellent | Excellent |
| Example50 | bal. | 1.1 | 0.50 | 1.0 | 0.0030 | Pt : 0.05 | 0.0017 | 733 | 0.81 | Excellent | Excellent | Excellent | Excellent | Excellent | Excellent |

[Table 2]

| | Alloy composition (mass%) | | | | | | Relation (1) Ag×Cu×-Bi×P | Relation (2) Ag/(P×Cu) | Relation (3) (Ag+Bi)/(Ag+Cu+Bi) | Evaluation1 Drop | Evaluation2 TCT | Evaluation3 Chip standing | Evaluation4 Bridges and icicles | Evaluation5 EM resistance | Overall evaluation |
|---|---|---|---|---|---|---|---|---|---|---|---|---|---|---|---|
| | Sn | Ag | Cu | Bi | P | Optional element | | | | | | | | | |
| Example51 | bal. | 1.1 | 0.50 | 1.0 | 0.0030 | Ge:0.05,Co:0.05 Ga:0.05, As:0.05 In:0.05, Zr:0.05 Mn:0.05, Ti:0.05 Zn:0.05, Fe:0.05 Al:0.05, Ni:0.05 Au:0.05, Mg:0.05 Cr:0.05, Pt:0.05 | 0.0017 | 733 | 0.81 | Excellent | Excellent | Excellent | Good | Excellent | Good |
| Comparative Example1 | bal. | 0.2 | 0.20 | 3.8 | 0.0100 | | 0.0015 | 100 | 0.95 | Excellent | Poor | Poor | Excellent | Poor | Poor |
| Comparative Example2 | bal. | 0.2 | 0.50 | 1.0 | 0.0030 | | 0.0003 | 133 | 0.71 | Excellent | Poor | Poor | Excellent | Poor | Poor |
| Comparative Example3 | bal. | 2.0 | 0.50 | 2.0 | 0.0050 | | 0.0100 | 800 | 0.89 | Poor | Excellent | Good | Excellent | Excellent | Poor |
| Comparative Example4 | bal. | 2.8 | 0.50 | 1.0 | 0.0100 | | 0.0140 | 560 | 0.88 | Poor | Excellent | Poor | Excellent | Excellent | Poor |
| Comparative Example5 | bal. | 2.8 | 0.50 | 1.0 | 0.0050 | Ni : 0.005 | 0.0070 | 1120 | 0.88 | Poor | Excellent | Poor | Good | Excellent | Poor |
| Comparative Example6 | bal. | 2.8 | 0.50 | 1.0 | 0.0100 | Ni : 0.005 | 0.0140 | 560 | 0.88 | Poor | Excellent | Poor | Good | Excellent | Poor |
| Comparative Example7 | bal. | 2.8 | 0.50 | 1.0 | 0.0050 | Ni : 0.02 | 0.0070 | 1120 | 0.88 | Poor | Excellent | Poor | Good | Excellent | Poor |
| Comparative Example8 | bal. | 2.8 | 0.50 | 1.0 | 0.0100 | Ni : 0.02 | 0.0140 | 560 | 0.88 | Poor | Excellent | Poor | Good | Excellent | Poor |
| Comparative Example9 | bal. | 2.8 | 0.50 | 1.0 | 0.0050 | Ni : 0.05 | 0.0070 | 1120 | 0.88 | Poor | Excellent | Poor | Good | Excellent | Poor |
| Comparative Example10 | bal. | 2.8 | 0.50 | 1.0 | 0.0100 | Ni : 0.05 | 0.0140 | 560 | 0.88 | Poor | Excellent | Poor | Good | Excellent | Poor |
| Comparative Example 11 | bal. | 1.0 | 0.05 | 1.0 | 0.0050 | Ni : 0.05 | 0.0003 | 4000 | 0.98 | Good | Poor | Excellent | Good | Poor | Poor |

| | Alloy composition (mass%) | | | | | | Relation (1) Ag×Cu×- Bi×P | Relation (2) Ag/(P×Cu) | Relation (3) (Ag+Bi)/(Ag+Cu+Bi) | Evaluation 1 Drop | Evaluation2 TCT | Evaluation3 Chip standing | Evaluation4 Bridges and icicles | Evaluation5 EM resistance | Overall evaluation |
|---|---|---|---|---|---|---|---|---|---|---|---|---|---|---|---|
| | Sn | Ag | Cu | Bi | P | Optional element | | | | | | | | | |
| Comparative Example12 | bal. | 1.1 | 0.30 | 1.0 | 0.0030 | | 0.0010 | 1222 | 0.88 | Excellent | Poor | Excellent | Excellent | Poor | Poor |
| Comparative Example 13 | bal. | 1.1 | 1.10 | 1.0 | 0.0030 | | 0.0036 | 333 | 0.66 | Excellent | Excellent | Excellent | Poor | Excellent | Poor |
| Comparative Examplel4 | bal. | 0.3 | 0.60 | 0.4 | 0.0030 | | 0.0002 | 167 | 0.54 | Excellent | Excellent | Excellent | Excellent | Poor | Poor |
| Comparative Example15 | bal. | 1.1 | 0.50 | 5.0 | 0.0030 | | 0.0083 | 733 | 0.92 | Poor | Excellent | Excellent | Excellent | Excellent | Poor |
| Comparative Example16 | bal. | 2.0 | 0.50 | 5.0 | 0.0030 | | 0.0150 | 1333 | 0.93 | Poor | Excellent | Good | Excellent | Excellent | Poor |
| Comparative Example17 | bal. | 2.0 | 0.50 | 5.0 | 0.0010 | Ni:0.005 | 0.0050 | 4000 | 0.93 | Poor | Excellent | Good | Excellent | Excellent | Poor |
| Comparative Example18 | bal. | 2.0 | 0.50 | 5.0 | 0.0030 | Ni:0.005 | 0.0150 | 1333 | 0.93 | Poor | Excellent | Good | Excellent | Excellent | Poor |
| Comparative Example19 | bal. | 2.0 | 0.50 | 5.0 | 0.0100 | Ni:0.005 | 0.0500 | 400 | 0.93 | Poor | Excellent | Good | Excellent | Excellent | Poor |
| Comparative Example20 | bal. | 1.0 | 0.50 | 1.0 | - | | 0.0000 | - | 0.80 | Good | Excellent | Excellent | Poor | Excellent | Poor |
| Comparative Example21 | bal. | 1.1 | 0.50 | 1.0 | 0.0004 | | 0.0002 | 5500 | 0.81 | Excellent | Excellent | Excellent | Poor | Excellent | Poor |
| Comparative Example22 | bal. | 1.1 | 0.50 | 1.0 | 0.0300 | | 0.0165 | 73 | 0.81 | Excellent | Excellent | Excellent | Poor | Excellent | Poor |

* The underline indicates that it does not fall within the scope of the present invention.

EP 4 763 411 A1

14

As is clear from Tables 1 and 2, all the evaluations of Examples 1 to 51 were judged as "Good" or "Excellent". In particular, in all of Examples 2, 3, 10 to 22, 26 to 45, and 47 to 50 in which Ni was not contained and the Relations (1) to (3) were satisfied, all the evaluations were judged as "Excellent", indicating a superior result among Examples.

On the other hand, in Comparative Example 1 and Comparative Example 2, due to a low content of Ag, TCT, chip standing, and EM resistance were poor. In Comparative Example 3, due to a high content of Ag, DROP was poor. In Comparative Examples 4 to 10, due to a further high content of Ag in all of the Comparative Examples, chip standing occurred in addition to DROP.

In Comparative Example 11 and Comparative Example 12, due to a low content of Cu, TCT and EM resistance were poor. In Comparative Example 13, due to a high content of Cu, bridges and icicles frequently occurred. In Comparative Example 14, due to a low content of Bi, the EM resistance was poor. In Comparative Examples 15 to 19, due to a high content of Bi, DROP was poor. In Comparative Examples 20 to 22, due to an inappropriate content of P, bridges and icicles frequently occurred.

The results of observing the cross section of the solder joint for the samples evaluated for EM resistance are shown in FIG. 1. FIG. 1 is a cross-sectional SEM photograph of a solder joint, FIG. 1(a) illustrates Comparative Example 1, and FIG. 1(b) illustrates Example 22. As is clear from FIG. 1(a), in the region surrounded by the square in Comparative Example 1, it has been found that Cu of the upper electrode was scraped, and Cu was deposited on the lower electrode. On the other hand, as is clear from FIG. 1(b), movement of Cu was not observed in a region surrounded by the square in Example 22. Similar results were obtained in other Examples. Note that general Cu erosion is a phenomenon in which both electrodes are eroded, and Cu is not deposited on the other electrode, so that Cu leaching and electromigration can be easily distinguished.

**Claims**

1. A solder alloy having an alloy composition consisting of, by mass%, Ag: 0.3 to 1.9%, Cu: 0.40 to 1.00%, Bi: 0.5 to 4.9%, P: 0.00100 to 0.02000%, with the balance being Sn.

2. The solder alloy according to claim 1, wherein the alloy composition further comprises, by mass%, Ga in an amount of 0.06% or less.

3. The solder alloy according to claim 1 or 2, wherein the alloy composition further comprises, by mass%, at least one of As, In, Zr, Mn, Ti, Zn, Fe, Al, Au, Mg, and Pt, and each may be present in an amount of 0.06% or less.

4. The solder alloy according to claim 1 or 2, wherein the alloy composition satisfies all of the following Relations (1) to (3):

$$0.0007 \leqq Ag \times Cu \times Bi \times P \leqq 0.0110 \qquad \text{Relation (1)}$$

$$110 \leqq Ag/(P \times Cu) \leqq 799 \qquad \text{Relation (2)}$$

$$0.67 \leqq (Ag+Bi)/(Ag+Cu+Bi) \leqq 0.91 \qquad \text{Relation (3)}$$

wherein Ag, Cu, Bi and P in the Relations (1) to (3) above represent the contents thereof as mass% in the alloy composition.

5. The solder alloy according to claim 3, wherein the alloy composition satisfies all of the following Relations (1) to (3):

$$0.0007 \leqq Ag \times Cu \times Bi \times P \leqq 0.0110 \qquad \text{Relation (1)}$$

$$110 \leqq Ag/(P \times Cu) \leqq 799 \qquad \text{Relation (2)}$$

$$0.67 \leqq (Ag+Bi)/(Ag+Cu+Bi) \leqq 0.91 \qquad \text{Relation (3)}$$

wherein Ag, Cu, Bi and P in the Relations (1) to (3) above represent the contents thereof as mass% in the alloy composition.

**6.** A solder paste comprising a solder powder consisting of the solder alloy according to claim 1 or 2.

**7.** A solder paste comprising a solder powder consisting of the solder alloy according to claim 3.

**8.** A solder ball consisting of the solder alloy according to claim 1 or 2.

**9.** A solder ball consisting of the solder alloy according to claim 3.

**10.** A solder preform consisting of the solder alloy according to claim 1 or 2.

**11.** A solder preform consisting of the solder alloy according to claim 3.

**12.** A solder joint comprising the solder alloy according to claim 1 or 2.

**13.** A solder joint comprising the solder alloy according to claim 3.

# Fig. 1

electrode

Solder Alloy

Cu

electrode

(a)

electrode

Solder Alloy

electrode

(b)

**EUROPEAN SEARCH REPORT**

Application Number

EP 25 22 4485

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2000 015476 A (ISHIKAWA KINZOKU KK) 18 January 2000 (2000-01-18) * 0046, 0047; tab. 1-6, X-07 to X-09 * | 1-13 | INV. B23K35/26 C22C13/02 |
| A | US 8 216 395 B2 (SENJU METAL INDUSTRY CO; MUNEKATA OSAMU [JP] ET AL.) 10 July 2012 (2012-07-10) * the whole document * | 1-13 | |
| A | EP 4 393 635 A1 (SENJU METAL INDUSTRY CO [JP]) 3 July 2024 (2024-07-03) * the whole document * | 1-13 | |
| A | EP 2 275 224 B1 (SENJU METAL INDUSTRY CO [JP]) 22 January 2014 (2014-01-22) * the whole document * | 1-13 | |
| A | US 2017/259366 A1 (ISHIKAWA SHINJI [JP] ET AL) 14 September 2017 (2017-09-14) * the whole document * | 1-13 | TECHNICAL FIELDS SEARCHED (IPC) B23K C22C |

The present search report has been drawn up for all claims

| Place of search | Date of completion of the search | Examiner |
|---|---|---|
| The Hague | 22 April 2026 | Kreutzer, Ingo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 4485

22-04-2026

| Patent document cited in search report | | Publication date | Patent family member(s) | | Publication date |
|---|---|---|---|---|---|
| JP 2000015476 | A | 18-01-2000 | NONE | | |
| US 8216395 | B2 | 10-07-2012 | NONE | | |
| EP 4393635 | A1 | 03-07-2024 | CN | 118043165 A | 14-05-2024 |
| | | | EP | 4393635 A1 | 03-07-2024 |
| | | | JP | 7161134 B1 | 26-10-2022 |
| | | | JP | 2023051075 A | 11-04-2023 |
| | | | KR | 20240058199 A | 03-05-2024 |
| | | | TW | 202315954 A | 16-04-2023 |
| | | | US | 2024399512 A1 | 05-12-2024 |
| | | | WO | 2023054630 A1 | 06-04-2023 |
| EP 2275224 | B1 | 22-01-2014 | CN | 102066043 A | 18-05-2011 |
| | | | EP | 2275224 A1 | 19-01-2011 |
| | | | JP | 5287852 B2 | 11-09-2013 |
| | | | JP | WO2009131178 A1 | 18-08-2011 |
| | | | KR | 20110038615 A | 14-04-2011 |
| | | | MY | 153585 A | 27-02-2015 |
| | | | US | 2011204121 A1 | 25-08-2011 |
| | | | WO | 2009131178 A1 | 29-10-2009 |
| US 2017259366 | A1 | 14-09-2017 | JP | 2016103530 A | 02-06-2016 |
| | | | US | 2017259366 A1 | 14-09-2017 |
| | | | WO | 2016084550 A1 | 02-06-2016 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007007732 A
- JP 2000288772 A
- JP H1034376 A
- JP 2004261863 A
- JP 2011183430 A
- JP H270033 A